# EUROPÄISCHE PATENTSCHRIFT

(11) **EP 0 442 243 B1**
(45) Veröffentlichungstag und Bekanntmachung des Hinweises auf die Patenterteilung: **29.09.1993**
(21) Anmeldenummer: 90811038.0
(22) Anmeldetag: 28.12.1990
(51) Int. Cl.: E04B 9/18, F16F 3/08, E04F 13/08

(54) **Abhänge- und Montagevorrichtung**
Suspension and assembling device
Dispositif de suspension et d'assemblage

(30) Priorität: 13.02.1990 CH 453/90
(43) Veröffentlichungstag der Anmeldung: 21.08.1991
(73) Patentinhaber: LANZ OENSINGEN AG, 4702 Oensingen (CH)
(72) Erfinder: Mühlethaler, Erhard, CH-3314 Schalunen (CH)
(74) Vertreter: OK pat AG

(56) Entgegenhaltungen:
- WO-A-88/09449
- DE-A- 2 150 566
- DE-A- 2 364 816
- DE-U- 8 715 256
- FR-A- 845 467
- US-A- 2 879 090

## Beschreibung

Die Erfindung betrifft eine Abhänge- und Montagevorrichtung mit Vierkant-Hohlprofilabschnitten, die zur Befestigung an Decken, Wänden oder untereinander mittels Verbindungsbolzen und sich innen am Profil abstützenden Dämmelementen bestimmt sind, wobei die Verbindungsblöcke eine einen Verbindungsbolzen aufnehmende Durchgangsbohrung und einen diese umgebenden, vorstehenden Ansatz aufweisen und wobei das Vierkant-Hohlprofil an der einen Seite einen Längsschlitz und mindestens an der gegenüberliegenden Seite Durchbrechungen aufweist.

Vorrichtungen dieser Art werden vor allem in der Haustechnik verwendet, beispielsweise für die Verlegung von Leitungen aller Art, für die Befestigung von Apparaten und Maschinen, für den Schalttafelbau, zum Aufbau von Regalen usw. Oft wird dabei eine schallisolierende Aufhängung bzw. Befestigung von Apparaten und/oder Leitungen gefordert. Nach bisheriger Praxis ist dies relativ umständlich, indem die Schalldämmung am Einzelobjekt mittels verschiedenartigen und auf den jeweiligen Anwendungsfall ausgerichteten Befestigungselementen erfolgt.

Aus der DE-A-2 150 566 ist eine Montagevorrichtung der eingangs genannten Art bekannt, die zur Befestigung von Wandverkleidungselementen an Raumwänden dient. Dabei ist ein Schallschutz durch die Verkleidungselemente selbst gegeben; die Montageteile - Profile, Verbindungsblöcke als Dämmelemente zur Wärmedämmung und Bolzen - sollen dagegen eine bequeme Befestigung und genaue Ausrichtung der Verkleidungselemente ermöglichen, ohne jedoch zur Schalldämmung beizutragen.

Ziel der Erfindung ist die Schaffung einer Abhänge- und Montagevorrichtung, welche vielfältige Möglichkeiten der schallisolierten Montage und Installation mit möglichst wenigen, standardisierten Einzelteilen bietet.

Diese Aufgabe wird erfindungsgemäss dadurch gelöst, dass zwecks Schallisolierung die Dämmelemente aus gummielastischem Material ausgebildet sind, und dass der über eine Profil-Auflagefläche der Dämmelemente vorstehende Ansatz sowie der Längsschlitz und die Durchbrechungen des Profils so aufeinander abgestimmt sind, dass der Ansatz einerseits im Schlitz längsverschiebbar geführt ist und anderseits auch lagefixierend in die Durchbrechungen passt. Indem das Profil und die Dämmelemente erfindungsgemäss aufeinander abgestimmt sind, entsteht ein einheitliches System, welches in sich selbst dem Erfordernis der Schallisolation gerecht wird. Insbesondere können - unter Verwendung der gleichen Einzelteile - tragende Systemteile wahlweise entweder schallgedämmt am Baukörper (Wände, Decken, Böden) befestigt werden, oder es können Rohre, Apparate usw. schallgedämmt an Systemteilen abgehängt bzw. montiert werden, die am Baukörper "hart" befestigt sind.

In den Patentansprüchen 2 und 3 sind besondere, zweckmässige Ausgestaltungen der erfindungsgemässen Vorrichtung angegegben. Die Erfindung bezieht sich ausserdem auf ein Dämmelement nach Anspruch 4, das im Hinblick auf die Vorrichtung besonders ausgestaltet ist.

Nachstehend werden Ausführungsbeispiele der Erfindung im Zusammenhang mit der Zeichnung im einzelnen beschrieben.
- Fig. 1 und Fig. 2: zeigen zwei verschiedene Vierkant-Hohlprofilabschnitte in perspektivischer Darstellung,
- Fig. 3: zeigt ein Dämmelement, ebenfalls perspektivisch, in etwas grösserem Massstab,
- Fig. 4, 5 und 6: zeigen verschiedene Montagevarianten unter Verwendung der Teile nach den Fig. 1-3, jeweils als Schnitt quer durch das Hohlprofil auf der Höhe eines Verbindungsbolzens.

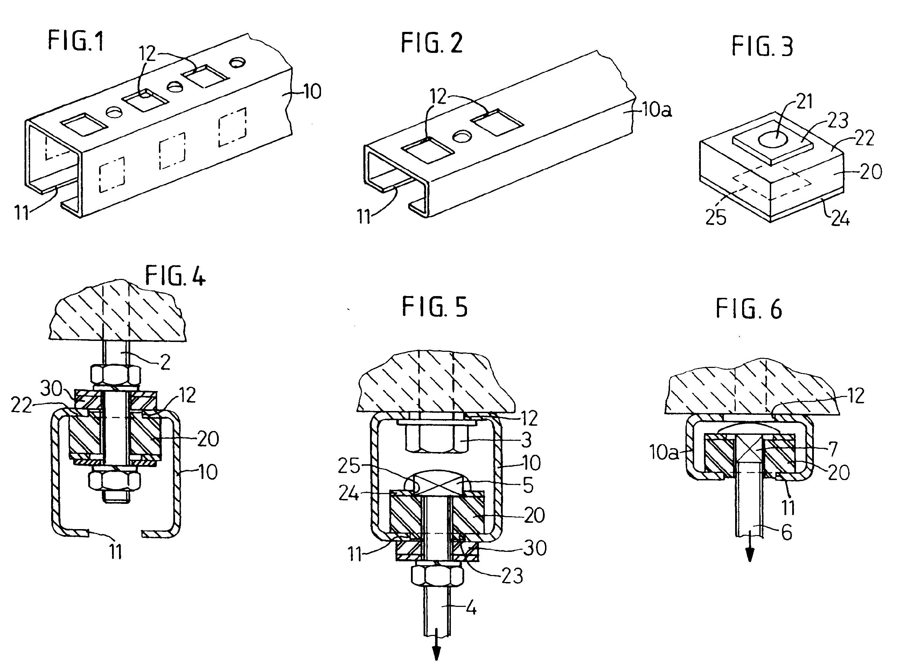

In den Fig. 1 und 2 sind zwei verschiedene Vierkant-Hohlprofilabschnitte 10 bzw. 10a abgebrochen dargestellt, die beide zur Verwendung in einer Abhänge- und Montagevorrichtung bestimmt sind. Der Abschnitt 10 nach Fig. 1 ist durch ein quadratisches Hohlprofil gebildet, während es sich beim Abschnitt 10a nach Fig. 2 um ein Rechteckprofil mit einem Seitenverhältnis von etwa 2:1, also von etwa der halben Höhe des Profils 10 handelt. Die Hohlprofile 10 und 10a sind an der einen Seite mit einem Längsschlitz 11 versehen, während die gegenüberliegende Seite Durchbrechungen 12 aufweist; beim Rechteckprofil 10a befinden sich Längsschlitz und Durchbrechungen je an den längeren Rechteckseiten. Vor allem das quadratische Profil 10 kann auch an den beiden übrigen Profilseiten entsprechende Durchbrechungen aufweisen, wie in Fig. 1 strichpunktiert angedeutet ist. Für gewisse Verwendungszwecke kann es ausreichen, dass nur die beiden Endbereiche eines Profilabschnittes Durchbrechungen 12 aufweisen, wie dies aus Fig. 2 hervorgeht.

Solche Profilabschnitte lassen sich in an sich bekannter Weise mittels Verbindungsbolzen an Decken, Wänden, Pfeilern usw. befestigen oder auch untereinander verbinden, um Montagevorrichtungen verschiedenster Gestalt aufzubauen oder Rohre, Leitungskanäle, Apparate usw. abzuhängen bzw. zu montieren.

Zwecks schallisolierender Befestigung bzw. Verbindung werden in die Hohlprofile einsetzbare Dämmelemente 20 gemäss Fig. 3 verwendet, wobei gleichzeitig eine elektrische Isolierung zwischen Profilabschnitten und Verbindungsbolzen erreicht wird. Ein solches Dämmelement 20 weist einen vorzugsweise quaderförmigen (oder auch zylindrischen) Körper aus gummielastischem Material mit einer Durchgangsbohrung 21 auf. Ueber eine Profil-Auflagefläche 22 des Dämmelementes steht ein Ansatz 23 vor, welcher die Bohrung 21 umgibt. Der Auflagefläche 22 gegenüberliegend ist eine Auflagescheibe 24, z.B. aus Stahl, vorgesehen, welche mit dem gummielastischen Körper des Dämmelementes fest verbunden ist. Zweckmässigerweise weist die Auflagescheibe 24 eine Durchbrechung 25 auf, welche der Gestalt des Ansatzes 23 entspricht (siehe Fig. 5, in Fig. 3 nur angedeutet).

Wie aus den Befestigungsbeispielen nach Fig. 4, 5 und 6 im einzelnen hervorgeht, sind die Profile 10, 10a und die Dämmelemente 20 mit ihrem Ansatz 23 in besonderer Weise aufeinander abgestimmt; der Ansatz 23 kann wahlweise in den Längsschlitz 11 oder eine der Druchbrechungen 12 eines Profilabschnittes eingreifen, wobei er im Schlitz 11 längsverschiebbar geführt, in der betreffenden Durchbrechung 12 jedoch lagefixiert ist. Es ist zweckmässig, wenn der erwähnte Eingriff des Ansatzes 23 drehgesichert erfolgt; vorzugsweise sind die Durchbrechungen 12 und der Ansatz 23, wie dargestellt, quadratisch, wobei die Länge der Quadratseite der Breite des Schlitzes 11 entspricht, jedoch könnten Lagefixierung und Drehsicherung grundsätzlich auch auf andere Weise, beispielsweise mit rechteckförmigen oder sechseckigen Durchbrechungen bzw. Ansätzen erreicht werden.

Beim Montagebeispiel nach Fig. 4 ist ein Profilabschnitt 10 an einem im Baukörper verankerten Gewindebolzen 2 schallisoliert befestigt, unter Verwendung eines Dämmelementes 20 und ferner einer Dämmscheibe 30. Die durchbohrte Dämmscheibe 30 weist eine Lage aus gummielastischem Material und eine metallische Auflagescheibe auf und dient als Gegenhaltung am Profil 10 gegenüber der Auflagefläche 22 des Dämmelementes. Beim dargestellten Beispiel greift der Ansatz 23 des Dämmelementes lagefixiert in eine Durchbrechung 12 ein, und der Längsschlitz 11 des Profils weist nach unten. Selbstverständlich wäre auch eine Montage mit um 180° um die Längsachse gedrehtem Profil 10 möglich, wobei der Ansatz 23 in den Längsschlitz 11 verschiebbar eingreifen würde, oder - falls das Profil auch an den beiden übrigen Seiten Durchbrechungen aufweist - mit um 90° gedrehtem Profil, wobei der Längsschlitz 11 nach einer Seite gerichtet wäre. Bei dieser Montageart sind sämtliche am Profilabschnitt 10 befestigten bzw. abgehängten Teile wie Apparate, Rohrschellen, weitere Profilabschnitte usw. gegenüber dem Baukörper schallisoliert.

Beim Beispiel nach Fig. 5 ist der Profilabschnitt 10 z.B. mittels Schrauben 3, welche durch Durchbrechungen 12 hindurchgeführt sind, am Baukörper "hart" befestigt. Dagegen ist ein Verbindungsbolzen 4, hier in Form einer Hammerkopfschraube, unter Verwendung eines Dämmelementes 20 und einer Dämmscheibe 30 schallisoliert am Profilabschnitt 10 abgehängt, wobei der Bolzen im Schlitz 4 in Längsrichtung einstellbar ist. Es können also bei dieser Montageart einzeln isolierte, lageeinstellbare Befestigungen gebildet werden, im übrigen aber auch andere Systemteile am Profilabschnitt 10 direkt, ohne Dämmelement, befestigt werden. Wie in Fig. 5 erkennbar, weist der Hammerkopf 5 einen kurzen, quadratischen Ansatz auf, welcher in die entsprechende Ausnehmung 25 an der Auflagescheibe 24 eingreift. Indem das Dämmelement 20 über seinen Ansatz 23 am Profilabschnitt 10 und ferner der Hammerkopf 5 gegenüber dem Dämmelement 20 drehgesichert ist, wird das Festziehen der Schraubenmutter auf dem Bolzen 4 sowie das Festschrauben weiterer Teile am Verbindungsbolzen 4 erleichtert.

Der rechteckige Profilabschnitt 10a nach Fig. 6 ist wiederum am Baukörper direkt befestigt (mittels nicht sichtbaren Bolzen in einer zur Zeichenebene versetzten Ebene). Am Profilabschnitt 10a ist ein Verbindungsbolzen 6 in Form einer Schlossschraube über das Dämmelement 20 schallisoliert abgehängt. Der Bolzen 6 mit dem Dämmelement 20 ist entlang dem Schlitz 11 verschiebbar, wobei das Dämmelement drehgesichert ist; die Schlossschraube ihrerseits ist ebenfalls drehgesichert dank dem an den Schraubenkopf anschliessenden Vierkant 7, welcher sich in das gummielastische Material einpresst.

Als gummielastisches Material für das Dämmelement 20 wie auch für die Dämmscheibe 30 eignet sich insbesondere ein synthetischer Kautschuk, beispielsweise "Neopren", wobei der Shore-Härtegrad des Materials je nach Belastung bzw. zulässiger Einfederung gewählt werden kann.

Ueber die Beispiele nach Fig. 4 bis 6 hinaus bestehen natürlich - bei Verwendung immer gleicher, einfacher und aufeinander abgestimmter Teile - noch zahlreiche weitere, nicht dargestellte Kombinations- bzw. Montagemöglichkeiten. Insbesondere können auf einem und demselben Verbindungsbolzen auch zwei (oder gar mehrere) Dämmelemente 20 verwendet werden. Dabei können die Dämmelemente aneinandergereiht (Ansatz 23 des einen Elementes in die Ausnehmung 25 des anderen eingreifend) oder am Profil einander gegenüberliegend (Ansätze 23 zweier Elemente in die gleiche Durchbrechung 12 oder in den Schlitz 11 eingreifend) angeordnet werden. Durch Variieren der Anordnung und/oder der Härtegrade lassen sich je nach Anforderung stark unterschiedliche Dämmcharakteristiken erreichen.

## Patentansprüche

1. Abhänge- und Montagevorrichtung mit Vierkant-Hohlprofilabschnitten, die zur Befestigung an Decken, Wänden oder untereinander mittels Verbindungsbolzen (2, 4, 6) und sich innen am Profil abstützenden Dämmelementen (20) bestimmt sind, wobei die Verbindungsblöcke eine einen Verbindungsbolzen aufnehmende Durchgangsbohrung (21) und einen diese umgebenden, vorstehenden Ansatz (23) aufweisen und wobei das Vierkant-Hohlprofil (10, 10a) an der einen Seite einen Längsschlitz (11) und mindestens an der gegenüberliegenden Seite Durchbrechungen (12) aufweist, dadurch **gekennzeichnet**, dass zwecks Schallisolierung die Dämmelemente (20) aus gummielastischem Material ausgebildet sind, und dass der über eine Profil-Auflagefläche (22) der Dämmelemente (20) vorstehende Ansatz (23) sowie der Längsschlitz (11) und die Durchbrechungen (12) des Profils (10, 10a) so aufeinander abgestimmt sind, dass der Ansatz (23) einerseits im Schlitz längsverschiebbar geführt ist und anderseits auch lagefixierend in die Durchbrechungen (12) passt.

2. Vorrichtung nach Anspruch 1, dadurch gekennzeichnet, dass der Ansatz (23) der Dämmelemente (20) drehgesichert in die Durchbrechungen (12) und den Längsschlitz (11) des Hohlprofils (10, 10a) eingreift.

3. Vorrichtung nach Anspruch 1, dadurch gekennzeichnet, dass zwecks Gegenhaltung am Profil (10, 10a) gegenüber der Auflagefläche (22) der Dämmelemente (20) durchbohrte Dämmscheiben (30) vorgesehen sind.

4. Dämmelement (20) für eine Abhänge- und Montagevorrichtung nach einem der Ansprüche 1 bis 3, mit einem gummielastischen Körper, einem mit diesem fest verbundenen metallischen Auflageteil (24) und einer dem Körper und dem Auflageteil gemeinsame Durchgangsbohrung (21), dadurch gekennzeichnet, dass der metallische Auflageteil eine flache Scheibe (24) ist, die einer vom gummielastischen Körper gebildeten Auflagefläche (22) gegenüberliegt und die eine die Durchgangsbohrung (21) umgebende Durchbrechung (25) aufweist, welche einem über die genannte Auflagefläche (22) vorstehenden Ansatz (23) entspricht.

## Claims

1. Suspension and mounting device comprising four-sided hollow profile sections adapted for fixing to ceilings, walls, and to each other by means of connecting bolts (2, 4, 6), and damping elements (20) supported internally on the profile, the connecting blocks incorporating a through-hole (21) for a connecting bolt and a projecting shoulder (23) surrounding said hole, and the four-sided hollow profile (10, 10a) incorporating a longitudinal slot (11) on one side and cut-outs (12) on at least the opposite side,
characterised in that for sound-insulation purposes the damping elements (20) are made of rubber or rubber-like elastic material, and in that the shoulder (23) projecting beyond a profile bearing surface (22) of the damping elements (20), and the longitudinal slot (11) and the cut-outs (12) in the profile (10, 10a), are designed to match, such that the shoulder (23) is on the one hand longitudinally displaceable along the slot and on the other hand also fits into the cut-outs (12) so as to be fixed in position.

2. Device according to claim 1, characterised in that the shoulder (23) of the damping elements (20) engages in the cut-outs (12) and in the longitudinal slot (11) of the hollow profile (10, 10a) so as to be locked against rotation.

3. Device according to claim 1, characterised in that drilled insulating washers (30) are provided for the purpose of counterholding against the profile (10, 10a) opposite to the bearing surface (22) of the damping elements (20).

4. Damping element (20) for a suspension and mounting device according to any of claims 1 to 3, comprising a rubber or rubber-like elastic body, a metal bearing part (24) rigidly joined to the latter, and a through-hole (21) common to said body and said bearing part,
characterised in that the metal bearing part is a flat plate (24) situated opposite a bearing surface (22) formed by the rubber or rubber-like elastic body and incorporating a cut-out (25) which surrounds said through-hole (21) and corresponds to a shoulder (23) projecting beyond said bearing surface (22).

## Revendications

1. Dispositif de suspension et de montage comportant des tronçons de profilés creux rectangulaires qui sont destinés à être fixés a des plafonds, murs, ou les uns aux autres à l'aide de vis d'assemblage (2, 4, 6), et des éléments isolants (20) qui prennent appui intérieurement sur le profilé et qui présentent un perçage traversant (21) qui reçoit une vis d'assemblage, et un collet saillant (23) qui entoure ce perçage, le profilé creux rectangulaire (10, 10a) présentant une fente longitudinale (11) sur un côté et des ouvertures (12), au moins sur le côté opposé, caractérisé en ce que pour l'isolation acoustique, les éléments isolants (20) sont réalisés en une matière à élasticité caoutchouteuse et en ce que le collet (23) qui fait saillie sur la surface de portée (22) des éléments isolants (20) qui porte sur le profilé, ainsi que la fente longitudinale (11) et les ouvertures du profilé (10, 10a), sont adaptés les uns aux autres de telle manière que, d'une part, le collet (23) soit guidé mobile en translation longitudinale dans la fente et que, d'autre part, il s'ajuste dans les ouvertures (12) d'une façon qui fixe sa position.

2. Dispositif selon la revendication 1, caractérisé en ce que le collet (23) des éléments isolants (20) est engagé bloqué en rotation dans les ouvertures (12) et dans la fente longitudinale (11) du profilé creux (10, 10a).

3. Dispositif selon la revendication 1, caractérisé en ce que des rondelles isolantes percées (30) sont prévues à l'opposé de la surface de portée (22) des éléments isolants (20) pour former un contre-appui sur le profilé (10, 10a).

4. Elément isolant (20) pour dispositif de suspension et de montage selon une des revendications 1 à 3, comprenant un corps à élasticité caoutchouteuse, un élement de portée métallique (24) fixé rigidement à ce corps et un perçage traversant (21) commun au corps et à l'élément de portée, caractérisé en ce que l'élément de portée métallique est une rondelle plate (24) qui fait face à une surface de portée (22) formée par le corps à élasticité caoutchouteuse, et qui présente une ouverture (25) autour du perçage traversant (21), qui correspond à un collet (23) en saillie sur la surface de portée (22) précitée.
